# FASCICULE DE BREVET EUROPEEN

(11) **EP 4 658 560 B1**
(45) Date de publication et mention de la délivrance du brevet: **14.10.2026**
(21) Numéro de dépôt: 24705726.8
(22) Date de dépôt: 31.01.2024
(51) Int. Cl.: B64C 11/38

(54) **MECANISME DE CHANGEMENT DE PAS AVEC DISPOSITIF DE VERROUILLAGE**
NEIGUNGSÄNDERUNGSMECHANISMUS MIT VERRIEGELUNGSVORRICHTUNG
PITCH-CHANGE MECHANISM WITH LOCKING DEVICE

(30) Priorité: 01.02.2023 FR 2300921
(43) Date de publication de la demande: 10.12.2025
(73) Titulaire: SAFRAN AIRCRAFT ENGINES, 75015 Paris (FR)
(72) Inventeur: RODA, Jean Charles Olivier, 77550 MOISSY-CRAMAYEL (FR); COTTET, Clément, 77550 MOISSY-CRAMAYEL (FR); BELJAMBE, Ceddric, 77550 MOISSY-CRAMAYEL (FR); FRANTZ, Caroline Marie, 77550 MOISSY-CRAMAYEL (FR)
(74) Mandataire: Regimbeau
(86) Numéro de dépôt international: PCT/FR2024/050126
(87) Numéro de publication internationale: WO 2024/161087

(56) Documents cités:
- GB-A- 595 264
- US-A- 2 843 212
- US-A1- 2007 212 220
- US-A1- 2014 294 585

## Description

### DOMAINE DE L'INVENTION

La présente invention concerne le domaine général des actionneurs destinés à la commande de l'orientation d'aubes à calage variable telles que celles équipant les soufflantes de certaines turbomachines.

Un domaine privilégié d'application de l'invention est celui des turboréacteurs à soufflante non carénée (mieux connus sous les appellations anglaises « propfan », « open fan », « open rotor » et « unducted fan »). Toutefois, l'invention s'applique également aux turbopropulseurs à une ou plusieurs hélices propulsives et aux turboréacteurs carénés avec aubes de soufflante à calage variable.

### ARRIERE-PLAN TECHNOLOGIQUE

Le document US 2 843 212 A décrit une turbomachine comprenant un système permettant de modifier le pas des pales d'une hélice, ce système comprenant un cylindre annulaire à fluide muni d'un entraînement linéaire et d'un mécanisme de liaison reliant le cylindre aux pales de l'hélice afin de modifier l'orientation de celle-ci. Le cylindre annulaire du système peut être monté de manière rigide sur un carter fixe supportant l'hélice et situé à l'intérieur de celle-ci, contrairement aux pales montées dans un moyeu rotatif externe de l'hélice, et le mécanisme de liaison comprend un palier de transfert de déplacement fixé, d'un côté, à la partie mobile du cylindre et coopérant, de l'autre côté, avec un mécanisme relié aux pales du moyeu rotatif de l'hélice.

Une des voies actuellement explorées pour améliorer la consommation spécifique des moteurs d'avions civils est constituée par la mise au point de turboréacteurs à soufflante non carénée, tels que celui décrit dans le document FR 2 941 493. Ces turboréacteurs comportent un générateur de gaz de turbomoteur classique, dont un ou plusieurs étages de turbine entraînent une ou plusieurs soufflante(s) non carénée(s) s'étendant à l'extérieur de la nacelle du moteur.

Les aubes de cette ou de ces soufflante(s) sont, comme dans le cas des turbopropulseurs classiques, à calage variable, c'est à dire que la position angulaire de ces aubes (appelée angle de calage) peut être modifiée au cours du vol. Pour rappel, l'angle de calage d'une aube correspond à l'angle, dans un plan orthogonal à l'axe de pivotement de l'aube, entre l'axe de rotation de la soufflante et la corde de l'aube à 75% du rayon de la soufflante. Il peut varier d'une valeur sensiblement égale à 90°, correspondant à une position dite « voile » ou « à plat » de l'aube, à une valeur sensiblement égale à 0°, correspondant à une position dite « drapeau » de l'aube. Il peut également prendre une valeur strictement supérieure à 90°, typiquement sensiblement égale à 95°, correspondant à une position dite « reverse » de l'aube.

Comme il est connu, cette modification de l'angle de calage au cours du vol permet de faire évoluer la poussée du moteur et optimiser le rendement de la soufflante en fonction de la vitesse de l'aéronef. En effet, le régime des soufflantes est quasiment constant sur toutes les phases de fonctionnement, et c'est le calage des aubes qui fait varier la poussée. Ainsi, en phase de vol de croisière, les aubes sont orientées de sorte à ajuster la poussée en minimisant la puissance prélevée sur l'arbre de turbine et la consommation et en optimisant le rendement. A l'inverse, au décollage, les aubes sont orientées de sorte à maximiser la poussée afin d'accélérer puis de faire décoller l'avion.

Le pilotage de l'orientation des aubes est communément réalisé au moyen d'un mécanisme de changement de pas comprenant un vérin de commande comportant une partie mobile en translation suivant l'axe de la soufflante et un système de liaison reliant la partie mobile à l'aube de sorte à convertir la translation de la partie mobile en rotation de l'aube à calage variable.

Une difficulté rencontrée avec les aubes à calage variable est que, en cas de dysfonctionnement des systèmes pilotant leur orientation, lesdites aubes ont tendance, sous leur propre effet centrifuge, à se mettre en position voile. Or, une aube bloquée dans cette position génère peu de couple résistif et risque de faire partir le moteur en survitesse, avec des risques de dégradation potentiels du moteur. Au surplus, une aube bloquée dans cette position risque également de générer une traînée excessive et inacceptable pour la contrôlabilité de l'avion et/ou son rayon d'action dans le cas d'une mission de diversion.

Pour remédier à cette difficulté, il est connu de recourir à des systèmes de sécurité aptes à s'opposer au déplacement des aubes à calage variable vers les petits pas (c'est-à-dire vers la position voile) en cas de défaillance du système de commande de l'orientation des aubes. Un tel système est par exemple connu de EP 3 400 169.

On connaît notamment un système de sécurité intégrant au vérin commandant l'orientation des aubes un système vis-écrou du type vis à billes couplé à un écrou de verrouillage. En fonctionnement normal, l'écrou du système vis-écrou suit les déplacements du vérin de commande, entraînant ainsi la rotation de la vis autour de son axe, pendant que l'écrou de verrouillage suit le filetage de la vis sans jamais la toucher (le taraudage de l'écrou de verrouillage est conçu de sorte à ménager un léger jeu avec le filetage de la vis). En cas de dysfonctionnement du système de commande de l'orientation des aubes, la vis du système vis-écrou est immobilisée (sa rotation est bloquée) et l'écrou de verrouillage vient en prise avec ladite vis, empêchant ainsi le pivotement des aubes vers les petits pas.

Ce système de sécurité ne donne cependant pas entière satisfaction. En effet, il requiert, pour un bon fonctionnement, une gestion précise et complexe des jeux entre l'écrou de verrouillage et le filetage de la vis.

### EXPOSE DE L'INVENTION

Un objectif de l'invention est de permettre, de manière simple et robuste, le verrouillage de l'angle de calage des aubes dans au moins un sens. D'autres objectifs sont de permettre le verrouillage de l'angle de calage des aubes dans leur orientation courante (avec une certaine tolérance), de permettre le verrouillage en l'absence d'énergie d'alimentation du vérin, de permettre le verrouillage et/ou le déverrouillage avec une force peu importante, et de limiter l'encombrement du mécanisme de verrouillage.

A cet effet, l'invention a pour objet, selon un premier aspect, un mécanisme de changement de pas selon la revendication 1. Des modes particuliers de ce mécanisme sont revendiqués dans les revendications dépendantes 2-6.

L'invention a également pour objet, selon un deuxième aspect, un rotor de soufflante pour turbomachine comprenant un moyeu et une pluralité d'aubes à calage variable chacune pivotable relativement au moyeu autour d'un axe de pivotement propre, le rotor comprenant en outre un mécanisme de changement de pas selon le premier aspect pour ajuster une position angulaire de chacune des aubes à calage variable autour de son axe de pivotement respectif.

L'invention a aussi pour objet, selon un troisième aspect, un moteur à turbine à gaz comprenant un rotor de soufflante selon le deuxième aspect.

L'invention a encore pour objet, selon un quatrième aspect, un aéronef comprenant au moins un moteur à turbine à gaz selon le troisième aspect.

Enfin, l'invention a pour objet, selon un cinquième aspect, un procédé de changement du pas des aubes d'un rotor de soufflante pour turbomachine, chacune pivotable relativement à un moyeu du rotor de soufflante autour d'un axe de pivotement propre, ledit procédé comprenant l'ajustement d'une position angulaire de chacune desdites aubes autour de son axe de pivotement respectif au moyen d'un mécanisme de changement de pas selon le premier aspect.

### BREVE DESCRIPTION DES FIGURES

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue de dessus d'un aéronef selon un exemple de réalisation de l'invention,
- la Figure 2 est une vue simplifiée en coupe longitudinale d'un moteur à turbine à gaz de l'aéronef de la Figure 1,
- la Figure 3 est une vue simplifiée partielle, en coupe longitudinale, d'une première variante d'un mécanisme de changement de pas du moteur à turbine à gaz de la Figure 2,
- la Figure 4 est une vue d'un détail marqué IV de la Figure 3, un dispositif de verrouillage de pas du mécanisme de changement de pas étant dans une première configuration,
- la Figure 5 est une vue similaire à celle de la Figure 4, le dispositif de verrouillage de pas étant dans une deuxième configuration,
- la Figure 6 est une vue simplifiée suivant un axe radial d'un bras de mise en rotation d'une aube à calage variable de la turbomachine de la Figure 2, et
- la Figure 7 est une vue similaire à celle de la Figure 3 d'une deuxième variante d'un mécanisme de changement de pas du moteur à turbine à gaz de la Figure 2, et
- la Figure 8 est une vue d'un détail marqué VIII de la Figure 7, un dispositif de verrouillage de pas du mécanisme de changement de pas étant dans une première configuration, et
- la Figure 9 est une vue similaire à celle de la Figure 8, le dispositif de verrouillage de pas étant dans une deuxième configuration.

### DESCRIPTION DETAILLEE D'UN EXEMPLE DE REALISATION

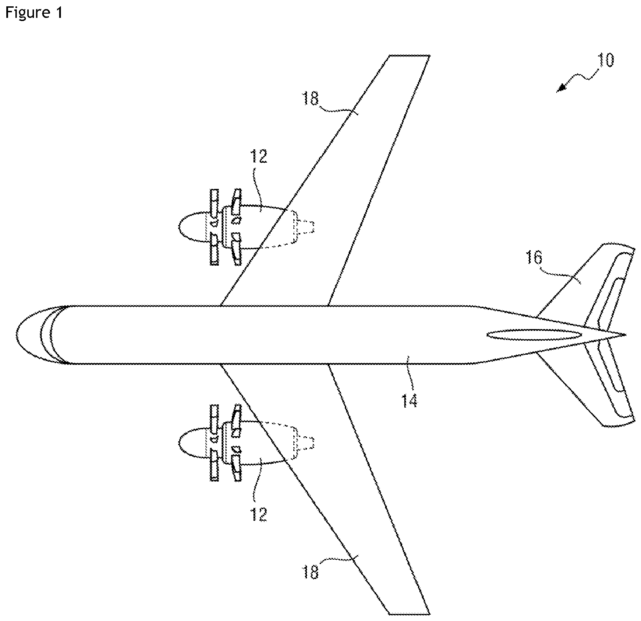

L'aéronef 10 représenté sur la Figure 1 comprend des turbomachine 12 formant moteurs à turbine à gaz pour le propulser.

Dans l'exemple représenté, l'aéronef 10 est un avion. Celui-ci comprend, de manière classique, un fuselage 14, un empennage 16 et deux ailes 18. Les moteurs à turbine à gaz 12 sont ici au nombre de deux et sont chacun logés sous une aile 18 respective. En variante (non représentée), les moteurs à turbine à gaz 12 sont disposés le long du fuselage 14, par exemple à proximité de l'empennage 16. En variante encore (également non représentée), l'aéronef 10 comprend un seul moteur à turbine à gaz 12 ou au moins trois moteurs à turbine à gaz 12.

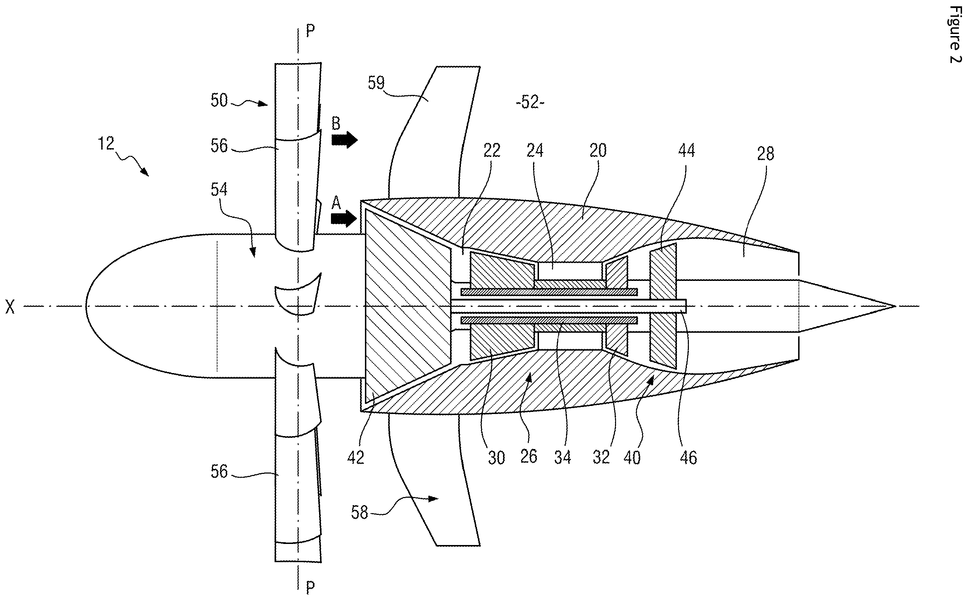

L'une des turbomachines 12 est représentée sur la Figure 2.

Comme visible sur cette Figure 2, la turbomachine 12 est allongée suivant un axe longitudinal X. Elle présente typiquement une symétrie angulaire autour dudit axe longitudinal X, c'est-à-dire qu'il existe au moins un angle pour lequel la turbomachine est invariante par rotation autour de l'axe longitudinal X.

Ici et dans la suite, les termes « intérieur » et « extérieur », « interne » et « externe », ainsi que leurs déclinaisons, s'entendent en référence à l'axe X, un élément qualifié de « intérieur » ou « interne » étant orienté vers l'axe X alors qu'un élément « extérieur » ou « externe » est orienté à l'opposé de l'axe X.

La turbomachine 12 comprend, de manière classique, une nacelle 20, une veine interne 22 de circulation d'un flux d'air à travers la nacelle 20, une chambre de combustion 24 logée dans la veine 22, un corps moteur 26 et une tuyère d'échappement des gaz 28.

Dans la suite, les termes « amont » et « aval » s'entendent en référence à un sens d'écoulement d'un flux d'air à travers la veine 22.

Le corps moteur 26 comprend un compresseur 30, une turbine 32 et un arbre de transmission 34 couplant la turbine 32 au compresseur 30 pour l'entraînement du compresseur 30 par la turbine 32. Le compresseur 30 est disposé en amont de la chambre de combustion 24 et alimente la chambre de combustion 24 en air comprimé. La turbine 32 est disposée en aval de la chambre de combustion 24 et reçoit les gaz d'échappement sortant de la chambre de combustion 24.

L'arbre de transmission 34 a pour axe de rotation l'axe longitudinal X.

L'arbre de transmission 34 est guidé en rotation par rapport à la nacelle 20 par le biais de paliers (non représentés).

Dans l'exemple représenté, la turbomachine 12 est une turbomachine à multiples corps, en particulier à double corps, comprenant un corps basse pression 40 en plus du corps moteur 26. Le corps moteur 26 constitue alors un corps haute pression, le compresseur 30 étant un compresseur haute pression, la turbine 32 étant une turbine haute pression et l'arbre de transmission 34 étant un arbre haute pression.

Le corps basse pression 40 comprend un compresseur basse pression 42, une turbine basse pression 44 et un arbre basse pression 46 couplant la turbine basse pression 44 au compresseur basse pression 42 pour l'entraînement du compresseur basse pression 42 par la turbine basse pression 44.

Le compresseur basse pression 42 est disposé en amont du compresseur haute pression 30 et alimente ce dernier en air comprimé. La turbine basse pression 44 est disposée en aval de la turbine haute pression 32 et reçoit les gaz d'échappement sortant de cette dernière.

L'arbre basse pression 46 est guidé en rotation par rapport à la nacelle 20 par le biais de paliers (non représentés).

L'arbre basse pression 46 est coaxial à l'arbre haute pression 34. Il a donc également pour axe de rotation l'axe longitudinal X. En particulier, l'arbre basse pression 46 s'étend à l'intérieur de l'arbre haute pression 34.

La turbomachine 12 comprend également une soufflante 50 pour entraîner le flux d'air dans une veine de circulation externe 52 entourant la nacelle 20. On distingue ainsi un flux d'air primaire A (chaud), constitué par la portion du flux d'air entraînée dans la veine de circulation interne 22, et un flux d'air secondaire B (froid), constitué par la portion du flux d'air entraînée dans la veine de circulation externe 52.

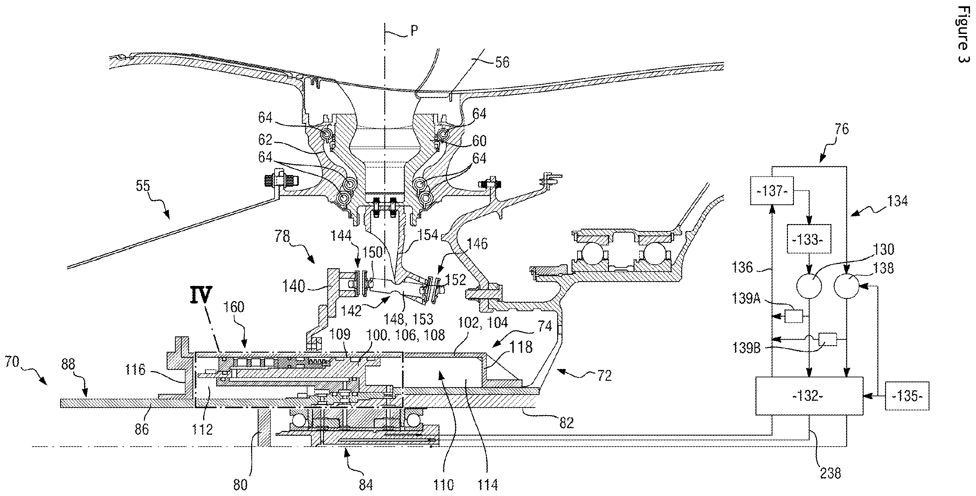

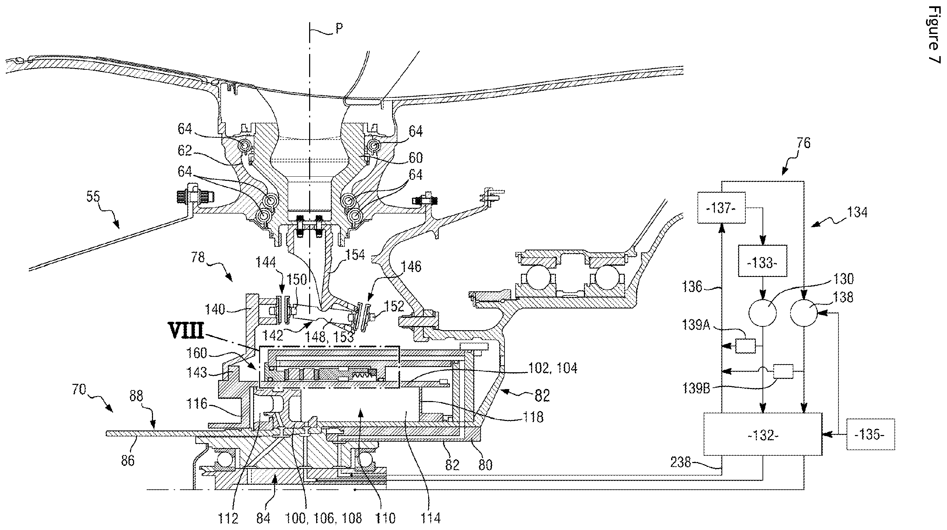

La soufflante 50 comprend un rotor de soufflante 54. Ce rotor de soufflante 54 est monté rotatif relativement à la nacelle 20 autour de l'axe longitudinal X. Il comprend un moyeu 55 (Figures 3 et 7) pourvu d'aubes de soufflante 56 s'étendant sensiblement radialement vers l'extérieur depuis le moyeu 55. Ces aubes 56, lorsqu'elles sont mises en rotation, entraînent le flux d'air dans la veine de circulation externe 52.

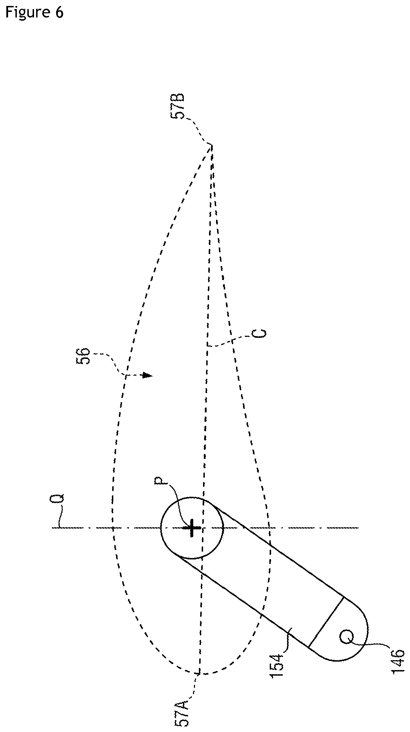

Comme visible sur la Figure 6, chaque aube 56 comprend un bord d'attaque 57A, un bord de fuite 57B et une corde C reliant le bord d'attaque 57A au bord de fuite 57B.

De retour à la Figure 2, le rotor de soufflante 54 est entraîné en rotation par la turbine basse pression 44, par l'intermédiaire de l'arbre basse pression 46. Cet entraînement se fait de préférence par l'intermédiaire d'un réducteur (non représenté) permettant au rotor de soufflante 54 de tourner à une vitesse inférieure à celle de l'arbre basse pression 46. En variante, cet entraînement est direct, c'est-à-dire que le rotor de soufflante 54 est solidaire en rotation de l'arbre basse pression 46.

Dans l'exemple représenté, la soufflante 50 comprend également un stator de soufflante 58 comprenant des aubes fixes 59 agencées à la périphérie de la nacelle 20, dans la veine de circulation externe 52, suivant un plan orthogonal à l'axe longitudinal X. Ce stator de soufflante 58 est ici agencé en aval du rotor de soufflante 54. En variante (non représentée), la soufflante 50 comprend, à la place du stator de soufflante 58, un rotor de soufflante contrarotatif.

Avantageusement, la soufflante 50 est, comme représenté, non carénée, c'est-à-dire que la veine de circulation externe 52 n'a aucune délimitation périphérique. La turbomachine 12 est alors constituée, comme représenté, par un turboréacteur à soufflante non carénée ou, en variante, par un turbopropulseur. En variante (non représentée), la veine de circulation externe 52 est définie entre la nacelle 20 et un carter de soufflante entourant la soufflante 50 ; la turbomachine 12 est alors typiquement constituée par un turboréacteur à fort taux de dilution (en anglais « bypass ratio »), le taux de dilution étant défini comme le rapport du débit du flux secondaire B (froid) sur le débit du flux primaire A (chaud).

Dans l'exemple représenté, la turbomachine 12 est en particulier du type « puller », c'est-à-dire que la soufflante 50 est disposée en amont de la veine de circulation interne 22 et entraîne également le flux d'air dans cette dernière. En variante (non représentée), la turbomachine est du type « pusher », c'est-à-dire que la soufflante 50 est placée autour de la moitié aval de la nacelle 20.

Les aubes 56 du rotor de soufflante 54 sont à calage variable, c'est-à-dire que chaque aube 56 est montée pivotante relativement au moyeu 55 autour d'un axe de pivotement P propre. Cet axe de pivotement P s'étend suivant la direction d'élongation de l'aube 56. Il est orthogonal à l'axe longitudinal X.

Chaque aube 56 est en particulier apte à pivoter autour de l'axe P relativement au moyeu 55 entre une position dite drapeau, dans laquelle la corde C de l'aube 56 est sensiblement parallèle à l'axe longitudinal X, et une position dite voile, dans laquelle la corde C de l'aube 56 est sensiblement orthogonale à l'axe longitudinal X. De préférence, chaque aube 56 est également apte à pivoter au-delà de la position voile, jusqu'à une position dite reverse, dans laquelle la corde C de l'aube 56 forme un angle strictement supérieure à 90°, par exemple sensiblement égal à 95°, avec l'axe longitudinal X. Les aubes 56 étant le plus souvent vrillées, la corde C prise comme référence pour la mesure de l'angle de calage est, par convention, constituée par la corde de l'aube à 75% du rayon du rotor de soufflante 54.

A cet effet, chaque aube 56 est solidaire, comme visible sur les Figures 3 et 7, d'une pièce d'attache 60 disposée en pied d'aube. Cette pièce d'attache 60 est montée rotative par rapport au moyeu 55 autour de l'axe de pivotement P. Plus précisément, la pièce d'attache 60 est montée rotative à l'intérieur d'un logement 62 ménagé dans le moyeu 55 par l'intermédiaire de billes 64 ou d'autres éléments roulants.

La soufflante 50 comprend en outre un mécanisme de changement de pas 70 pour ajuster l'angle de calage de chaque aube 56 autour de son axe de pivotement P de sorte à adapter les performances de la turbomachine 12 aux différentes phases de vol.

En référence aux Figures 3 et 7, ce mécanisme de changement de pas 70 comprend un bâti 72, un vérin de commande 74, un système 76 de pilotage du vérin 74 et un système de liaison 78.

Le bâti 72 est solidaire du moyeu 55 et est typiquement constitué par une partie du moyeu 55. Il est ainsi fixe relativement aux axes de pivotement P.

Le bâti 72 comprend un socle 80. Ce socle 80 est centré sur l'axe longitudinal X. Ici, il est traversé par les axes de pivotement P.

Dans l'exemple représenté, le socle 80 délimite un logement 82 ouvert vers l'aval. Ce logement 82 est en particulier cylindrique, typiquement cylindrique de révolution, et centré sur l'axe X. Un palier de transfert d'huile 84 est reçu dans ledit logement 82.

Dans l'exemple représenté, le bâti 72 comprend également un cylindre 86 faisant saillie vers l'amont depuis le socle 80. Ce cylindre 86 est centré sur l'axe X. Il est typiquement cylindrique de révolution.

Le socle 80 et le cylindre périphérique 86 délimitent ensemble une surface périphérique externe 88 du bâti 72. Cette surface périphérique externe 88 est sensiblement cylindrique et centrée sur l'axe X. Elle est orientée radialement vers l'extérieur.

Le vérin de commande 74 comporte une partie fixe 100, solidaire du bâti 72, et une partie mobile 102 mobile en translation suivant l'axe longitudinal X relativement à la partie fixe 100 entre une position rétractée, représentée sur les Figures 3 et 7, et une position déployée (non représentée). Optionnellement, la partie mobile 102 est également mobile en rotation autour de l'axe longitudinal X sur un angle restreint, par exemple de l'ordre de 5°.

Le vérin de commande 74 comprend en particulier un cylindre 104, continu, formant l'un de la partie fixe 100 et de la partie mobile 102 et un piston 106 formant l'autre de la partie fixe 100 et de la partie mobile 102. Ici, le cylindre 104 forme la partie mobile 102 et le piston 106 forme la partie fixe 100. En variante (non représentée), c'est l'inverse : le cylindre 104 forme la partie fixe 100 et le piston 106 forme la partie mobile 102.

Ainsi, dans l'exemple représenté, le cylindre 104 s'étend autour de la surface périphérique externe 88 du bâti 72, coaxialement à cette dernière, et le piston 106 est constitué par une collerette 108 solidaire du bâti 72 s'étendant radialement vers l'extérieur depuis la surface périphérique externe 88 jusqu'au cylindre 104.

Le piston 106 présente une face externe 109 en contact avec le cylindre 104.

Le cylindre 104 délimite une cavité interne 110. Le piston 106 divise ladite cavité interne 110 en deux chambres fluidiques 112, 114 contigües. Chacune contient un fluide de commande, typiquement constitué par une huile, pour commander le déplacement de la partie mobile 102 relativement à la partie fixe 100. Ce fluide de commande est à une première pression dans la première chambre fluidique 112 et à une deuxième pression dans la deuxième chambre fluidique 114. Les première et deuxième chambres fluidiques 112, 114 sont agencées de sorte que l'augmentation relative de la première pression (c'est-à-dire relativement à la deuxième pression) entraîne le déplacement du piston 110 vers sa position déployée, l'augmentation relative de la deuxième pression (c'est-à-dire relativement à la première pression) entraînant le déplacement du piston 110 vers sa position rétractée.

Ici, chacune des chambres fluidiques 112, 114 est délimitée intérieurement par la surface périphérique externe 88 du bâti 72 et extérieurement par le cylindre 104. La première chambre fluidique 112 est par ailleurs délimitée à son extrémité aval par le piston 106 et la deuxième chambre fluidique 114 est délimitée à son extrémité amont par le piston 106.

Le vérin de commande 74 est ainsi particulièrement compact, ce qui permet de l'alléger.

Dans l'exemple représenté, la partie mobile 102 comprend également une bague de guidage amont 116 et une bague de guidage aval 118 chacune solidaire du cylindre 104 et s'étendant radialement vers l'intérieur depuis le cylindre 104 jusqu'à la face périphérique externe 88 du bâti 72. La bague de guidage amont 116 est disposée en amont du piston 106 et délimite une extrémité amont de la première chambre fluidique 112. La bague de guidage aval 118 est disposée en aval du piston 106 et délimite une extrémité aval de la deuxième chambre fluidique 114.

Dans l'exemple représenté, chacune des bagues de guidage amont et aval 116, 118 constitue une bague d'étanchéité et ferme longitudinalement la première chambre fluidique 112, respectivement la deuxième chambre fluidique 114. Les chambres fluidiques 112, 114 sont ainsi fermées à chacune des extrémités longitudinales du vérin de commande 74
En variante (non représentée), seule la bague de guidage aval 118 constitue une bague d'étanchéité. La bague de guidage amont 116 présente, elle, des perçages permettant au fluide de commande de s'écouler à travers la bague de guidage amont 116.

En variante encore (non représentée), la partie mobile 102 ne comprend pas de bague de guidage amont 116.

Le système de pilotage 76 comprend un générateur de pression 130 pour porter le fluide de commande à une troisième pression supérieure aux première et deuxième pressions, une unité de contrôle de pression 132 pour ajuster la pression du fluide de commande dans les première et deuxième chambres fluidiques 112, 114 au moyen de la troisième pression, et une ligne de retour 136 pour évacuer le fluide de commande dépressurisé. Le système de pilotage 76 comprend également un réservoir principal 133, un circuit de secours 134 et un module de commande 135.

Le générateur de pression 130 comprend par exemple une pompe apte à pomper le fluide pour le porter à la troisième pression, par exemple 100 bars. Une soupape de surpression principale 139A permet d'évacuer une partie du fluide de commande vers la ligne de retour 136 lorsque la pression du fluide de commande en aval du générateur de pression 130 excède la troisième pression.

L'unité de contrôle de pression 132 est alimentée en fluide de commande à la troisième pression par le générateur de pression 130. Elle est raccordée fluidiquement à la première chambre fluidique 112 et à la deuxième chambre fluidique 114 via le palier de transfert d'huile 84. Elle est apte à répartir le fluide de commande entre la première chambre fluidique 112 et la deuxième chambre fluidique 114 de manière à ajuster la pression de fluide à l'intérieur de chacune de ces chambres 112, 114 et, ainsi, ajuster la position du piston 110 entre ses positions rétractée et déployée. Elle est également apte à évacuer du fluide de commande provenant des première et deuxième chambres fluidiques 112, 114 dans la ligne de retour 136.

Le réservoir principal 133 est configuré pour collecter du fluide de commande dépressurisé provenant de la ligne de retour 136. Il alimente le générateur de pression 130.

Le circuit de secours 134 est apte à alimenter la première chambre fluidique 112 en fluide de commande de manière à déplacer le piston 110 vers sa position déployée en cas de défaillance du générateur de pression 130. A cet effet, le circuit de secours 134 comprend un réservoir auxiliaire 137 et une pompe auxiliaire 138. Dans l'exemple représenté il comprend également une soupape de surpression auxiliaire 139B.

Le réservoir auxiliaire 137 est configuré pour collecter du fluide de commande dépressurisé provenant de la ligne de retour 136. Il alimente la pompe auxiliaire 138. Dans l'exemple représenté, il alimente également le réservoir principal 133, le fluide de commande dépressurisé provenant de la ligne de retour 136 transitant par le réservoir auxiliaire 137 avant d'atteindre le réservoir principal 133.

La pompe auxiliaire 138 est apte à pomper le fluide de commande dans le réservoir auxiliaire 137 pour le porter à la troisième pression. Elle est raccordée fluidiquement à l'unité de contrôle de pression 132 de manière à l'alimenter en fluide de commande à la troisième pression, l'unité de contrôle de pression 132 étant configurée pour rediriger l'intégralité du fluide de commande provenant de la pompe auxiliaire 138 vers la première chambre fluidique 112.

La soupape de surpression 139B est apte à évacuer une partie du fluide de commande vers la ligne de retour 136 lorsque la pression du fluide de commande en aval de la pompe auxiliaire 138 excède la troisième pression.

Le module de commande 135 est configuré pour recevoir une instruction de calage (non représentée) et en déduire un signal de commande transmis à l'unité de contrôle de pression 132. En particulier, le module de commande 135 est configuré pour transmettre à l'unité de contrôle de pression 132 un signal de commande destiné à augmenter la pression de fluide dans la première chambre 112 lorsque l'instruction de calage vise à faire augmenter le pas des aubes 56, et pour transmettre à l'unité de contrôle de pression 132 un signal de commande destiné à augmenter la pression de fluide dans la deuxième chambre 114 lorsque l'instruction de calage vise à faire réduire le pas des aubes 56.

Le module de commande 135 est également configuré pour transmettre au circuit de secours 134, plus particulièrement à sa pompe auxiliaire 138, une instruction de démarrage en cas de défaillance du générateur de pression 130.

Le système de liaison 78 relie la partie mobile 102 à chaque aube 56 de sorte à convertir la translation de la partie mobile 102 suivant l'axe longitudinal X et, le cas échéant, la rotation de la partie mobile 102 autour de l'axe longitudinal X en une rotation de chaque aube 56 autour de son axe de pivotement P. En particulier, le système de liaison 78 relie la partie mobile 102 à chaque aube 56 de sorte à convertir :
- la translation de la partie mobile 102 suivant l'axe longitudinal X dans un premier sens en une rotation de l'aube à calage variable 56 autour de l'axe de pivotement P vers la position voile, et
- la translation de la partie mobile 102 suivant l'axe longitudinal X dans un deuxième sens opposé au premier sens en une rotation de l'aube à calage variable 56 autour de l'axe de pivotement P vers la position drapeau.

A cet effet, le système de liaison 78 comprend une couronne de synchronisation 140 solidaire de la partie mobile 102 et, pour chacune des aubes 56, un mécanisme 142 de liaison de l'aube 56 à la couronne de synchronisation 140.

La couronne de synchronisation 140 s'étend dans un plan radial autour de la partie mobile 102. Dans l'exemple de réalisation des Figures 3 à 5, elle est fixée à une portion médiane de la partie mobile 102. Dans l'exemple de réalisation des Figures 7 à 9, elle est fixée à une extrémité amont 143 de la partie mobile 102.

Chaque mécanisme de liaison 142 comprend une première articulation 144 solidaire de la partie mobile 102, une deuxième articulation 146 solidaire de l'aube 56, à l'écart de l'axe de pivotement P de ladite aube 56, et un organe de liaison 148 reliant la première articulation 144 à la deuxième articulation 146.

La première articulation 144 est portée par la couronne de synchronisation 140. Elle est ici constituée par une liaison rotule.

La deuxième articulation 146 est également constituée par une liaison rotule. Elle est excentrée relativement à l'axe de pivotement P.

L'organe de liaison 148 présente une première extrémité 150 articulée à la première articulation 144 et une deuxième extrémité 152 articulée à la deuxième articulation 146. Avantageusement l'organe de liaison 148 est rigide et de longueur réglable, c'est-à-dire que la distance entre les première et deuxième extrémités 150, 152 peut être modifiée, ce qui permet d'en régler précisément la longueur à l'arrêt de sorte à permettre le pilotage de l'angle de calage de chaque aube 56 par le mécanisme de changement de pas 70.

L'organe de liaison 148 est ici constitué par une bielle 153.

Dans l'exemple représenté chaque mécanisme de liaison 142 comprend également une manivelle 154 reliant la pièce d'attache 60 à la deuxième articulation 146. Cette manivelle 154 est rigide et solidaire de la pièce d'attache 60. Elle s'étend au moins pour partie suivant une direction orthogonale à l'axe de pivotement P. Elle forme un bras de mise en rotation de l'aube 56.

Dans l'exemple représenté, le premier sens va de l'amont vers l'aval, c'est-à-dire que le déplacement de l'organe mobile 102 vers sa position rétractée entraîne une rotation de chaque aube 56 vers sa position voile, et le deuxième sens va de l'aval vers l'amont, c'est-à-dire que le déplacement de l'organe mobile 102 vers sa position déployée entraîne une rotation de chaque aube 56 vers sa position drapeau. De plus, la première articulation 144 est disposée à l'amont de la deuxième articulation 146.

A cet effet, la deuxième articulation 146 est, comme visible sur la Figure 6, placée à l'opposé du bord de fuite 57B relativement à un plan Q orthogonal à la corde C et contenant l'axe de pivotement P.

En variante (non représentée), le premier sens va de l'aval vers l'amont, la première articulation 144 étant disposée à l'aval de la deuxième articulation 146. La deuxième articulation 146 est alors placée du même côté du bord de fuite 57B relativement au plan Q orthogonal à la corde C et contenant l'axe de pivotement P.

Ces agencements particuliers permettent, lorsque le mécanisme de changement de pas 70 est immobilisé, que les sollicitations naturelles de l'aube 56 vers sa position voile fassent travailler l'organe de liaison 148 en traction et non en compression. Le risque de flambage de l'organe de liaison 148 est donc très faible, de sorte qu'il est possible d'utiliser un organe de liaison 148 relativement peu résistant et ainsi d'alléger le mécanisme de changement de pas 70.

Le mécanisme de changement de pas 70 comprend encore un dispositif de verrouillage de pas 160 propre à bloquer la translation de la partie mobile 102 du vérin de commande 74 dans les deux sens, c'est-à-dire tant vers sa position rétractée que vers sa position déployée.

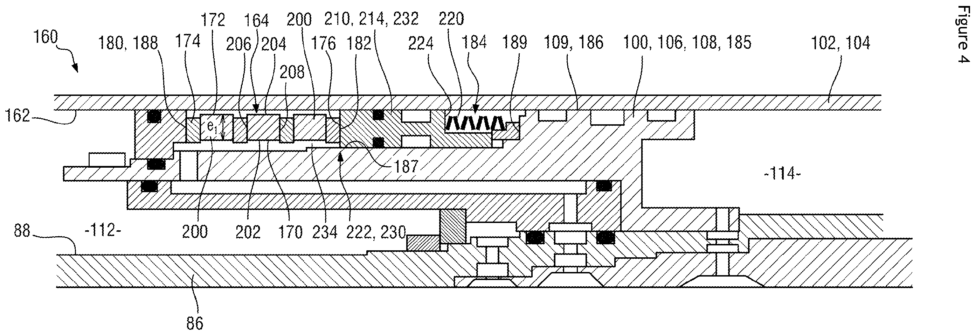

En référence aux Figures 4, 5, 8 et 9, le dispositif de verrouillage 160 comprend une surface cylindrique 162 mobile conjointement avec la partie mobile 102 relativement à la partie fixe 100 et un organe de blocage 164 pour immobiliser la partie mobile 102 relativement à la partie fixe 100 en venant en prise avec la surface cylindrique 162.

La surface cylindrique 162 est en particulier solidaire de la partie mobile 102.

La surface cylindrique 162 est avantageusement, comme représenté, sensiblement coaxiale à l'axe X.

Ici, la surface cylindrique 162 est portée directement par la partie mobile 102. Dans l'exemple de réalisation des Figures 3 à 5, elle constitue une surface interne du cylindre 104. Dans l'exemple de réalisation des Figures 7 à 9, elle constitue une surface externe dudit cylindre 104.

Typiquement, la surface cylindrique 162 est sensiblement lisse.

L'organe de blocage 164 présente une face radiale interne 170, orientée radialement vers l'axe X et délimitant radialement l'organe de blocage 164 vers l'intérieur, et une face radiale externe 172, orientée radialement à l'opposé de l'axe X et délimitant radialement l'organe de blocage 164 vers l'extérieur. Il présente également une face longitudinale amont 174, orientée longitudinalement vers l'amont et délimitant longitudinalement l'organe de blocage 164 vers l'amont, et une face longitudinale aval 176, orientée longitudinalement vers l'aval et délimitant longitudinalement l'organe de blocage 164 vers l'aval.

L'organe de blocage 164 est positionné relativement à la surface cylindrique 162 de sorte que l'un de l'organe de blocage 164 et de la surface cylindrique 162 soit interposé entre l'axe X et l'autre de l'organe de blocage 164 et de la surface cylindrique 162. Ainsi, dans l'exemple de réalisation des Figures 3 à 5, l'organe de blocage 164 est interposé entre l'axe X et la surface cylindrique 162 et, dans l'exemple de réalisation des Figures 7 à 9, la surface cylindrique 162 est interposée entre l'axe X et l'organe de blocage 164.

Ici, l'organe de blocage 164 est annulaire et sensiblement coaxial à la surface cylindrique 162. Il est donc positionné relativement à la surface cylindrique 162 de sorte que l'un de l'organe de blocage 164 et de la surface cylindrique 162 entoure l'autre de l'organe de blocage 164 et de la surface cylindrique 162. En particulier, dans l'exemple de réalisation des Figures 3 à 5, la surface cylindrique 162 entoure l'organe de blocage 164 et, dans l'exemple de réalisation des Figures 7 à 9, l'organe de blocage 164 entoure la surface cylindrique 162.

L'organe de blocage 164 est sensiblement fixe suivant la direction longitudinale (c'est-à-dire parallèlement à l'axe X) par rapport au bâti 72. A cet effet, il est ici enchâssé entre deux butées radiales 180, 182 se faisant face et limitant les déplacements longitudinaux de l'organe de blocage 164 par rapport au bâti 72. Ces butées 180, 182 comprennent une butée amont 180, disposée en amont de l'organe de blocage 164, et une butée aval 182, disposée en aval de l'organe de blocage 164. Ici, le bord longitudinal amont 174 est en contact avec la butée amont 180 et le bord longitudinal aval 176 est en contact avec la butée aval 182.

L'une des butées 180, 182, ici la butée amont 180, est solidaire du bâti 72.

En particulier, l'organe de blocage 164 est logé dans un évidement 184, ici un évidement annulaire centré sur l'axe X, d'un support 185 solidaire du bâti 72. Cet évidement 184 débouche dans une face 186 dudit support 185 qui fait face à la surface cylindrique 162. Il est délimité par un fond 187 en retrait par rapport à ladite face 186 et deux épaulements 188, 189 radiaux reliant le fond 187 à la face 186, l'un desdits épaulements 188 délimitant la butée 180.

Dans l'exemple de réalisation des Figures 3 à 5, où le dispositif de verrouillage 160 est logé à l'intérieur du vérin de commande 74, ledit support 185 est constitué par le piston 106, la face 186 étant constituée par la face externe 109 dudit piston 106.

Dans l'exemple de réalisation des Figures 7 à 9, où le dispositif de verrouillage 160 est disposé radialement à l'extérieur du vérin de commande 74 et en particulier entoure le vérin de commande 74, le support 185 est disposé radialement à l'extérieur de l'organe de blocage 164 et du vérin de commande 74. Il est en particulier cylindrique et s'étend autour de l'organe de blocage 164. La face 186 constitue une face interne, orientée vers l'axe X, dudit support 185 et qui est ici en contact avec le cylindre 104.

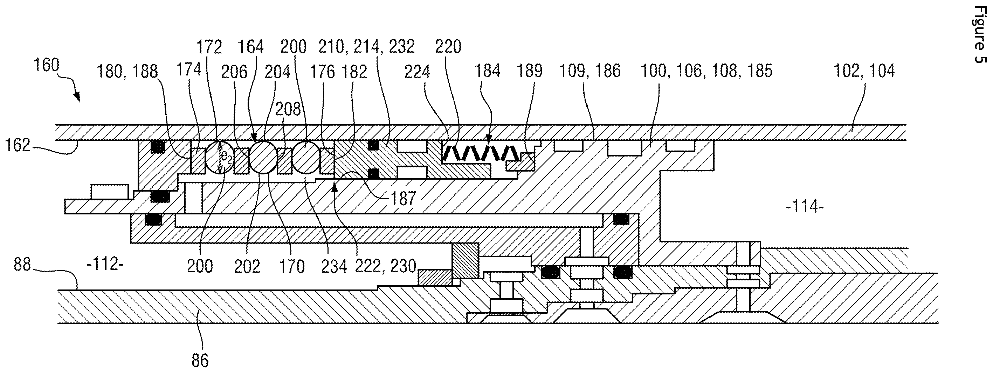

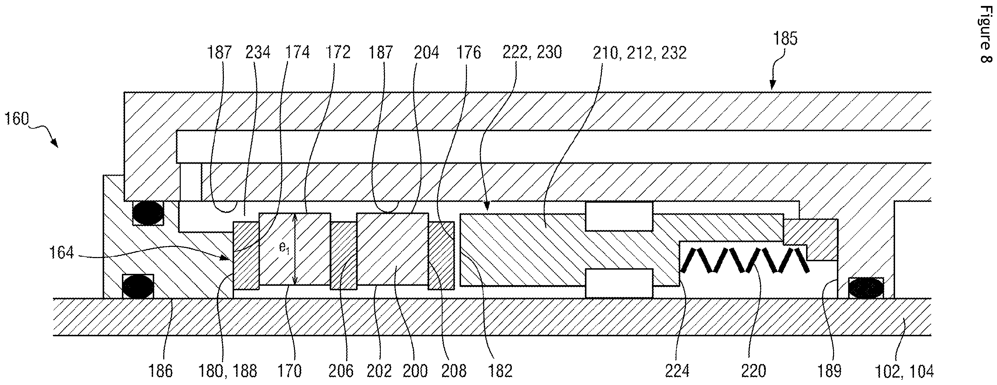

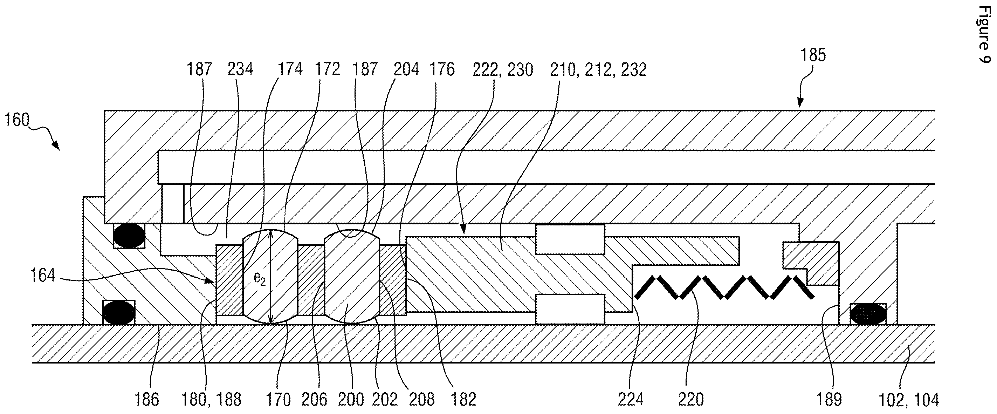

L'organe de blocage 164 présente une première configuration, représentée sur les Figures 4 et 8, dans laquelle il est à l'écart de la surface cylindrique 162, et une deuxième configuration, représentée sur les Figures 5 et 9, dans laquelle sa face radiale interne 170 est déplacée radialement vers l'intérieur et/ou sa face radiale externe 172 est déplacée radialement vers l'extérieur de sorte que l'organe de blocage 164 soit en prise avec la surface cylindrique 162, la partie mobile 102 étant immobilisée relativement au bâti 72. La deuxième configuration constitue ainsi une configuration de verrouillage de l'organe de blocage 164, la première configuration constituant une configuration de déverrouillage.

A cet effet, l'organe de blocage 164 comprend une pluralité d'éléments déformables 200 juxtaposés les uns aux autres parallèlement à l'axe longitudinal X.

Chaque élément déformable 200 présente un bord radial interne 202, orienté radialement vers l'axe X et délimitant radialement l'élément déformable 200 vers l'intérieur, et un bord radial externe 204, orienté radialement à l'opposé de l'axe X et délimitant radialement l'élément déformable 200 vers l'extérieur. Il présente également un bord longitudinal amont 206, orienté longitudinalement vers l'amont et délimitant longitudinalement l'élément déformable 200 vers l'amont, et un bord longitudinal aval 208, orientée longitudinalement vers l'aval et délimitant longitudinalement l'élément déformable 200 vers l'aval.

Les bords radiaux internes 202 des éléments déformables 200 forment ensemble la face interne 170 de l'organe de blocage 164. Les bords radiaux externes 204 des éléments déformables 200 forment ensemble la face externe 172 de l'organe de blocage 164.

Dans l'exemple représenté, chaque élément déformable 200 est annulaire. Le bord radial interne 202 de chaque élément déformable 200 constitue donc une tranche interne dudit élément déformable 200 et le bord radial externe 204 de chaque élément déformable 200 constitue une tranche externe dudit élément déformable 200. Chaque élément déformable 200 est en outre sensiblement coaxial à la surface cylindrique 162.

Chaque élément déformable 200 est de préférence formé d'une pièce. En variante, chaque élément déformable 200 est formé de plusieurs segments espacés circonférentiellement les uns des autres.

Chaque élément déformable 200 est déformable élastiquement de sorte que, au repos, il présente une première épaisseur radiale e₁ (Figures 4 et 8) et, lorsqu'il est comprimé parallèlement à l'axe longitudinal X, il présente une deuxième épaisseur radiale e₂ (Figures 5 et 9) supérieure à la première épaisseur radiale e₁, lesdites épaisseurs radiales e₁, e₂ étant mesurées entre le bord radial interne 202 et le bord radial externe 204 de l'élément déformable 200. L'organe de blocage 164 est ainsi en configuration de verrouillage lorsque les éléments déformables 200 sont comprimés parallèlement à l'axe longitudinal X et en configuration de déverrouillage lorsque les éléments déformables 200 sont au repos (ou, du moins, lorsque la force de compression est relâchée).

A cet effet, chaque élément déformable 200 est formé et est de préférence constitué d'un matériau présentant un coefficient de Poisson strictement positif. Ainsi, chaque élément déformable 200 se dilate radialement lorsqu'il est comprimé longitudinalement. Ledit coefficient de Poisson est de préférence supérieur à 0,4, avantageusement supérieur à 0,45 et par exemple supérieur à 0,49. Ainsi, la dilatation de chaque élément déformable 200 sous l'effet de la compression se fait à volume presque constant, ce qui limite l'encombrement longitudinal.

Le matériau de chaque élément déformable 200 est par ailleurs choisi de manière à présenter un coefficient d'adhérence important, c'est-à-dire supérieur à 0,1.

Ledit matériau est typiquement un polyuréthane.

De préférence, lorsqu'il est au repos, chaque élément déformable 200 a, comme représenté, une dimension longitudinale (mesurée entre ses bords longitudinaux 206, 208) inférieure ou égale au quintuple, par exemple inférieure ou égale au double de son épaisseur radiale e₁. Cela évite tout flambage de l'élément déformable 200 sous l'effet de la compression et permet que la variation d'épaisseur de l'élément déformable 200 résulte purement d'une dilatation radiale de l'élément déformable 200.

Toujours en référence aux Figures 4, 5, 8 et 9, le dispositif de verrouillage 160 comprend également un organe mobile 210, mobile en translation relativement au bâti 72 et à l'organe de blocage 164 entre une position rétractée, représentée sur les Figures 4 et 8, dans laquelle il laisse l'organe de blocage 164 libre d'être dans sa configuration de déverrouillage et une position déployée, représentée sur les Figure 5 et 9, dans laquelle il force l'organe de blocage 164 dans sa configuration de verrouillage.

A cet effet, l'organe mobile 210 délimite la deuxième 182 des butées 180, 182 entre lesquelles l'organe de blocage 164 est en enchâssé. L'organe de blocage 164 est ainsi interposé, suivant la direction de translation de l'organe mobile 210, entre l'organe mobile 210 et une butée solidaire du bâti 72, ici la butée 180, de sorte que chaque élément déformable 200 soit comprimé entre l'organe mobile 210 et la butée 180 lorsque l'organe mobile 210 est en position déployée et soit au repos (ou, plus généralement, moins comprimé) lorsque l'organe mobile 210 est en position rétractée.

La direction de translation de l'organe mobile 210 entre ses positions rétractée et déployée est en particulier la direction longitudinale (c'est-à-dire parallèlement à l'axe longitudinal X).

Dans l'exemple représenté, l'organe mobile 210 est logé dans l'évidement 184, entre l'organe de blocage 164 et l'épaulement 189.

L'organe mobile 210 s'étend autour de l'axe X. Ici, il comprend une bague 212 délimitant la butée 182. La butée 182 est ainsi annulaire. En variante (non représentée), la butée 182 est portée par des bras faisant saillie longitudinalement depuis une bague de synchronisation ; la butée 182 est alors formée de plusieurs sections espacées circonférentiellement les unes des autres.

Toujours en référence aux Figures 5, 6, 8 et 9, le dispositif de verrouillage 160 comprend encore un organe de rappel 220 sollicitant l'organe mobile 210 vers sa position déployée, et un dispositif de maintien 222 pour maintenir l'organe mobile 210 dans sa position rétractée sous certaines conditions prédéterminées, typiquement lorsque la troisième pression est supérieure à un seuil.

Grâce à l'organe de rappel 220, la position de l'organe mobile 210 au repos est la position déployée. Cela permet de forcer l'organe de blocage 164 dans sa configuration de verrouillage même en cas de panne.

L'organe de rappel 220 est ici constitué par un ressort de compression comprimé entre le bâti 72 et un épaulement 224 solidaire de l'organe mobile 210. En particulier, ledit ressort de compression est comprimé entre l'épaulement 189 de l'évidement 184 et ledit épaulement 224.

Le dispositif de maintien 222 comprend un vérin de contrebalancement 230 comportant un piston de contrebalancement 232 et une chambre de contrebalancement 234.

Le piston de contrebalancement 232 est monté mobile en translation suivant l'axe longitudinal X relativement au bâti 72. Ici, il délimite l'épaulement 224 contre lequel appuie l'organe de rappel 220.

Le piston de contrebalancement 232 est en particulier coaxial à l'organe mobile 210. Dans l'exemple représenté, il est constitué par l'organe de mobile 210, ce qui permet de gagner en compacité.

La chambre de contrebalancement 234 est délimitée entre le piston de contrebalancement 232 et le bâti 72. En particulier, la chambre de contrebalancement 234 est délimitée longitudinalement entre les butées 180, 182.

Avantageusement, la chambre de contrebalancement 234 est également délimitée radialement entre le fond 187 de l'évidement 184 et l'organe de blocage 164. A cet effet, l'organe de blocage 164 est imperméable au fluide de commande et forme un contact étanche avec chacune des butées 180, 182. Cela permet, en particulier dans le mode de réalisation des Figures 7 à 9, que la partie de l'organe de blocage 164 orientée vers la surface 162 et qui vient en prise avec la surface 162 dans la configuration de verrouillage ne baigne pas dans le fluide de commande. Ainsi, le coefficient de frottement entre l'organe de blocage 164 et la surface 162 est augmenté, ce qui permet de réduire la taille de l'organe de blocage 164 et donc de gagner en compacité.

La chambre de contrebalancement 234 est raccordée fluidiquement au générateur de pression 130 par un circuit de connexion fluidique 238 (Figures 3 et 7) de sorte à être alimentée en fluide de commande à la troisième pression. Elle est destinée à contrebalancer la sollicitation du dispositif de rappel 220 lorsque cette alimentation est active.

A cet effet, le vérin de contrebalancement 230 est agencé de sorte que la pression exercée sur le piston 232 par le fluide contenu dans la chambre 234 soit orientée dans une direction opposée à celle de la sollicitation du dispositif de rappel 230. A cet effet, le piston de contrebalancement 232 est, dans l'exemple représenté, interposé entre la chambre 234 et l'épaulement 224 et l'épaulement 224 est interposé entre le piston 232 et le dispositif de rappel 220. De plus, le piston de contrebalancement 232 et la chambre de contrebalancement 234 sont dimensionnés de sorte que, lorsque la chambre 234 est alimentée en fluide de commande à une pression supérieure au seuil, la force exercée par le fluide de commande sur le piston 232 soit supérieure à la sollicitation du dispositif de rappel 220.

Ainsi, tant que la pression fournie à la chambre 234 est supérieure au seuil, la sollicitation du dispositif de rappel 220 est annulée et l'organe mobile 210 maintenu en position rétractée. En revanche, lorsque la chambre 234 n'est plus alimentée en fluide de commande à une pression supérieure au seuil, typiquement lorsque le générateur de pression 130 tombe en panne, la force du dispositif de rappel 220 l'emporte et l'organe mobile 210 est déplacé dans sa position déployée.

En référence aux Figures 3 et 7, l'unité de contrôle de pression 132 est ici interposée fluidiquement entre le générateur de pression 130 et le circuit de connexion fluidique 238. Elle présente une première configuration, dans laquelle elle isole le circuit de connexion fluidique 238 de la ligne de retour 136, et une deuxième configuration, dans laquelle elle raccorde fluidiquement le circuit de connexion fluidique 238 à la ligne de retour 136.

L'unité de contrôle de pression 132 est configurée pour être normalement dans sa première configuration et pour basculer dans sa deuxième configuration sur réception d'une instruction de commande transmise par le module de commande 135.

Un procédé de changement du pas des aubes 56, mis en œuvre par le mécanisme de changement de pas 70, va maintenant être décrit.

Lors d'une première étape de ce procédé, le module de commande 135 reçoit tout d'abord une instruction de calage visant à faire augmenter le pas des aubes 56. Le module de commande 135 transmet alors à l'unité de contrôle de pression 132 un signal de commande destiné à augmenter la pression de fluide dans la première chambre 112. La pression de fluide dans la première chambre 112 augmentant, la partie mobile 102 du vérin 74 se déplace dans le deuxième sens, vers sa position déployée, ce qui, par l'intermédiaire du système de liaison 78, entraîne le pivotement des aubes 56 vers les grands pas (c'est-à-dire vers la position drapeau).

Sous l'effet de sa propre élasticité et de la pression dans la chambre de contrebalancement 234, l'organe de blocage 164 reste en configuration de déverrouillage à l'écart de la surface cylindrique 162 et ne s'oppose donc pas au déplacement de la partie mobile 102.

Une fois la partie mobile 102 arrivée dans une position d'équilibre, elle se stabilise, les aubes 56 conservant une orientation fixe.

Lors d'une deuxième étape du procédé de changement de pas, le module de commande 135 reçoit tout d'abord une instruction de calage visant à faire réduire le pas des aubes 56. Le module de commande 135 transmet alors à l'unité de contrôle de pression 132 un signal de commande destiné à augmenter la pression de fluide dans la deuxième chambre 114. La pression de fluide dans la deuxième chambre 114 augmentant, la partie mobile 102 du vérin 74 se déplace dans le premier sens vers sa position rétractée, ce qui, par l'intermédiaire du système de liaison 78, entraîne le pivotement des aubes 56 vers les petits pas (c'est-à-dire vers la position voile).

Sous l'effet de sa propre élasticité et de la pression dans la chambre de contrebalancement 234, l'organe de blocage 164 reste en configuration de déverrouillage à l'écart de la surface cylindrique 162 et ne s'oppose donc pas au déplacement de la partie mobile 102.

Une fois la partie mobile 102 arrivée dans une position d'équilibre, elle se stabilise, les aubes 56 conservant une orientation fixe.

Optionnellement, le procédé de changement de pas comprend également, suite à la première ou à la deuxième étape, une étape de verrouillage commandé de l'orientation des aubes 56.

Lors de cette étape, le module de commande 135 transmet à l'unité de contrôle de pression 132 une commande de verrouillage de pas. Sous l'effet de cette commande, l'unité de contrôle de pression 132 raccorde fluidiquement le circuit de connexion fluidique 256 à la ligne de retour 136, entraînant une baisse de la pression de fluide dans la chambre de contrebalancement 234. La pression de fluide dans ladite chambre 234 passe alors sous le seuil et est donc insuffisante pour contrebalancer la sollicitation du dispositif de rappel 220, qui ainsi entraîne le déploiement de l'organe mobile 210. Celui-ci vient alors comprimer l'organe de blocage 164 contre la butée 180, ce qui force l'expansion radiale des éléments déformables et provoque le basculement de l'organe de blocage 164 dans sa configuration de verrouillage.

La partie mobile 102 ne peut alors plus se déplacer relativement à la partie fixe 100. Les aubes 56 sont ainsi bloquées dans leur orientation même en cas de perte de pression fluidique dans l'une des chambres 112, 114.

En cas de dysfonctionnement du système de pilotage 76, typiquement en cas de panne du générateur de pression 130, le procédé de changement de pas comprend une étape supplémentaire de verrouillage non-commandé de l'orientation des aubes 56.

Lors de cette étape, le dysfonctionnement du système de pilotage 76 entraîne une baisse de la pression de fluide dans la chambre de contrebalancement 234, typiquement parce que le générateur de pression 130 n'est plus en mesure de porter la troisième pression au-delà du seuil. La pression de fluide dans ladite chambre 234 est alors insuffisante pour contrebalancer la sollicitation du dispositif de rappel 220, qui ainsi entraîne le déploiement de l'organe de mobile 210. Celui-ci vient alors comprimer l'organe de blocage 164 contre la butée 180, ce qui force l'expansion radiale des éléments déformables et provoque le basculement de l'organe de blocage 164 dans sa configuration de verrouillage.

La partie mobile 102 ne peut alors plus se déplacer relativement à la partie fixe 100. Les aubes 56 sont ainsi bloquées dans leur orientation.

L'étape de verrouillage non-commandé est de préférence suivie d'une étape de mise en sécurité de la soufflante 50. Lors de cette étape, le circuit de secours 134 est activé et alimente la première chambre fluidique 112 et la chambre de contrebalancement 234 en fluide de commande de manière à augmenter la pression fluidique dans ces chambres. Sous l'effet de l'augmentation de pression dans la chambre 234, l'organe mobile 210 se rétracte et l'organe de blocage 164 revient en configuration de déverrouillage. La partie mobile 102 n'est donc plus immobilisée et peut se déplacer vers l'aval sous l'effet de l'augmentation de pression dans la première chambre fluidique 112 jusqu'à ce que les aubes 56 se retrouvent en position drapeau.

On notera que ces différentes étapes peuvent être mises en œuvre indépendamment les unes des autres.

Ainsi, grâce aux exemples de réalisation décrit ci-dessus, il est possible, de manière simple et robuste, de verrouiller l'orientation courante des aubes 56 (avec une certaine tolérance). Ce verrouillage est rendu possible même en l'absence d'énergie d'alimentation du vérin 74 et même avec une force peu importante. Et ce verrouillage est permis sans augmentation significative de l'encombrement du mécanisme 70.

Par ailleurs, l'exemple de réalisation des Figures 3 à 5 s'avère être particulièrement compact radialement et simplifier la conception du mécanisme 70 en facilitant l'alimentation de la chambre de contrebalancement 234 via le palier de transfert d'huile 84.

L'exemple de réalisation des Figures 7 à 9, quant à lui, est particulièrement compact longitudinalement et permet d'avoir une chambre de contrebalancement 234 de section radiale plus importante.

On notera que, bien que la description ci-dessus ait été donnée pour le mode de réalisation dans lequel la surface cylindrique 162 est mobile conjointement avec la partie mobile 102 relativement au bâti 72, l'invention ne se limite aucunement à ce seul mode de réalisation. Ainsi, dans un autre mode de réalisation (non représenté), c'est l'organe de blocage 164 qui est mobile conjointement avec la partie mobile 102 relativement au bâti 72, la surface cylindrique 162 étant alors solidaire du bâti 72.

## Revendications

1. Mécanisme de changement de pas (70) pour ajuster une position angulaire d'au moins une aube à calage variable (56) d'une turbomachine d'aéronef autour d'un axe (P) de pivotement de l'aube (56), ledit mécanisme de changement de pas (70) comprenant :
- un bâti (72) fixe relativement à l'axe de pivotement (P),
- un vérin de commande (74) comportant une partie fixe (100) solidaire du bâti (72) et une partie mobile (102) mobile en translation suivant un axe longitudinal (X) relativement à la partie fixe (100) entre une position rétractée et une position déployée,
- un système de liaison (78) reliant la partie mobile (102) à l'aube à calage variable (56) de sorte à convertir la translation de la partie mobile (102) suivant l'axe longitudinal (X) en une rotation de l'aube à calage variable (56) autour de l'axe de pivotement (P), et
- un dispositif de verrouillage de pas (160) propre à bloquer la translation de la partie mobile (102) relativement à la partie fixe (100) dans au moins un sens,
dans lequel le dispositif de verrouillage de pas (160) comprend :
- une surface (162) solidaire du bâti (72) ou mobile conjointement avec la partie mobile (102) relativement au bâti (72),
- un organe de blocage (164) présentant une configuration de déverrouillage à l'écart de la surface (162) et une configuration de verrouillage en prise avec la surface (162) de sorte que la partie mobile (102) soit immobilisée relativement au bâti (72),
- un organe mobile (210) mobile en translation relativement à l'organe de blocage (164) entre une position rétractée dans laquelle il laisse l'organe de blocage (164) libre d'être dans sa configuration de déverrouillage et une position déployée dans laquelle il force l'organe de blocage (164) dans sa configuration de verrouillage,
- un organe de rappel (220) sollicitant l'organe mobile (210) vers sa position déployée, et
- un dispositif de maintien (222) pour maintenir l'organe mobile (210) dans sa position rétractée sous certaines conditions prédéterminées,
et dans lequel l'organe de blocage (164) comprend au moins un élément déformable (200), déformable élastiquement, présentant au repos une première épaisseur radiale (e₁) et, lorsqu'il est comprimé parallèlement à l'axe longitudinal (X), une deuxième épaisseur radiale (e₂) supérieure à la première épaisseur radiale (e₁), l'organe de blocage (164) étant en configuration de déverrouillage lorsque l'élément déformable (200) est au repos et en configuration de verrouillage lorsque l'élément déformable (200) est comprimé parallèlement à l'axe longitudinal (X).

2. Mécanisme de changement de pas (70) selon la revendication 1, dans lequel l'organe de blocage (164) est interposé, suivant la direction de translation de l'organe mobile (210), entre l'organe mobile (210) et une butée (180) de sorte que le ou chaque élément déformable (200) soit comprimé entre l'organe mobile (210) et la butée (180) lorsque l'organe mobile (210) est en position déployée, le ou chaque élément déformable (200) étant de préférence au repos lorsque l'organe mobile (210) est en position rétractée.

3. Mécanisme de changement de pas (70) selon la revendication 1 ou 2, dans lequel le ou chaque élément déformable (200) est formé d'un matériau présentant un coefficient de Poisson strictement positif, de préférence supérieur à 0,4, avantageusement supérieur à 0,45, par exemple supérieur à 0,49.

4. Mécanisme de changement de pas (70) selon l'une quelconque des revendications 1 à 3, dans lequel le ou chaque élément déformable (200) est annulaire.

5. Mécanisme de changement de pas (70) selon l'une quelconque des revendications précédentes, dans lequel la surface (162) est cylindrique et de préférence sensiblement coaxiale à l'axe longitudinal (X).

6. Mécanisme de changement de pas (70) selon les revendications 4 et 5 prises ensemble, dans lequel l'élément déformable (200) est sensiblement coaxial à la surface (162).

7. Rotor de soufflante (54) pour turbomachine comprenant un moyeu (55) et une pluralité d'aubes à calage variable (56) chacune pivotable relativement au moyeu (55) autour d'un axe de pivotement (P) propre, le rotor (54) comprenant en outre un mécanisme de changement de pas (70) selon l'une quelconque des revendications précédentes pour ajuster une position angulaire de chacune des aubes à calage variable (56) autour de son axe de pivotement (P) respectif.

8. Moteur à turbine à gaz (12) comprenant un rotor de soufflante (54) selon la revendication 7.

9. Aéronef (10) comprenant au moins un moteur à turbine à gaz (12) selon la revendication 8.

10. Procédé de changement du pas des aubes (56) d'un rotor de soufflante (54) pour turbomachine, chacune pivotable relativement à un moyeu (55) du rotor de soufflante (54) autour d'un axe de pivotement (P) propre, ledit procédé comprenant l'ajustement d'une position angulaire de chacune desdites aubes (56) autour de son axe de pivotement (P) respectif au moyen d'un mécanisme de changement de pas (70) selon l'une quelconque des revendications 1 à 6.

## Patentansprüche

1. Steigungsverstellmechanismus (70) zur Einstellung einer Winkelposition mindestens einer Schaufel mit veränderbarer Einstellung (56) einer Turbomaschine eines Luftfahrzeugs um eine Schwenkachse (P) der Schaufel (56), wobei der Steigungsverstellmechanismus (70) umfasst:
- ein Gehäuse (72), das relativ zu der Schwenkachse (P) fest ist,
- einen Stellzylinder (74), der einen festen Teil (100), welcher mit dem Gehäuse (72) fest verbunden ist, und einen beweglichen Teil (102) aufweist, der gemäß einer Längsachse (X) relativ zu dem festen Teil (100) zwischen einer eingefahrenen Position und einer ausgefahrenen Position translatorisch beweglich ist,
- ein Verbindungssystem (78), das den beweglichen Teil (102) mit der Schaufel mit veränderbarer Einstellung (56) verbindet, um die Translation des beweglichen Teils (102) gemäß der Längsachse (X) in eine Drehung der Schaufel mit veränderbarer Einstellung (56) um die Schwenkachse (P) umzuwandeln, und
- eine Steigungsverriegelungsvorrichtung (160), die geeignet ist, die Translation des beweglichen Teils (102) relativ zu dem festen Teil (100) in mindestens einer Richtung zu blockieren,
wobei die Steigungsverriegelungsvorrichtung (160) umfasst:
- eine Fläche (162), die mit dem Gehäuse (72) fest verbunden oder gemeinsam mit dem beweglichen Teil (102) relativ zu dem Gehäuse (72) beweglich ist,
- ein Blockierelement (164), das eine Entriegelungskonfiguration beabstandet von der Fläche (162) und eine Verriegelungskonfiguration in Eingriff mit der Fläche (162) aufweist, so dass der bewegliche Teil (102) relativ zu dem Gehäuse (72) arretiert ist,
- ein bewegliches Element (210), das relativ zu dem Blockierelement (164) zwischen einer eingefahrenen Position, in der es das Blockierelement (164) freigibt, in seiner Entriegelungskonfiguration zu sein, und einer ausgefahrenen Position, in der es das Blockierelement (164) in seine Verriegelungskonfiguration zwingt, translatorisch beweglich ist,
- ein Rückstellelement (200), welches das bewegliche Element (210) in seine ausgefahrene Position beaufschlagt, und
- eine Haltevorrichtung (222), um das bewegliche Element (210) unter bestimmten vorbestimmten Bedingungen in der eingefahrenen Position zu halten,
und wobei das Blockierelement (164) mindestens ein verformbares Element (200) umfasst, das elastisch verformbar ist, das in Ruhe eine erste radiale Dicke (e₁) und, wenn es parallel zu der Längsachse (X) komprimiert ist, eine zweite radiale Dicke (e₂) aufweist, die größer als die erste radiale Dicke (e₁) ist, wobei das Blockierelement (164) in Entriegelungsposition ist, wenn das verformbare Element (200) in Ruhe ist und in Verriegelungskonfiguration, wenn das verformbare Element (200) parallel zu der Längsachse (X) komprimiert wird.

2. Steigungsverstellmechanismus (70) nach Anspruch 1, wobei das Blockierelement (164) gemäß der Translationsrichtung des beweglichen Elements (210) zwischen dem beweglichen Element (210) und einem Anschlag (180) angeordnet ist, so dass das oder jedes verformbare Element (200) zwischen dem beweglichen Element (210) und dem Anschlag (180) komprimiert wird, wenn das bewegliche Element (210) in ausgefahrener Position ist, wobei das oder jedes verformbare Element (200) vorzugsweise in Ruhe ist, wenn das bewegliche Element (210) in eingefahrener Position ist.

3. Steigungsverstellmechanismus (70) nach Anspruch 1 oder 2, wobei das oder jedes verformbare Element (200) aus einem Material gebildet ist, das einen strikt positiven Poisson-Koeffizienten vorzugsweise über 0,4, in vorteilhafter Weise über 0,45, beispielsweise über 0,49, aufweist.

4. Steigungsverstellmechanismus (70) nach einem der Ansprüche 1 bis 3, wobei das oder jedes verformbare Element (200) ringförmig ist.

5. Steigungsverstellmechanismus (70) nach einem der vorhergehenden Ansprüche, wobei die Fläche (162) zylindrisch und vorzugsweise im Wesentlichen koaxial zu der Längsachse (X) ist.

6. Steigungsverstellmechanismus (70) nach den gemeinsam herangezogenen Ansprüchen 4 und 5, wobei das verformbare Element (200) im Wesentlichen koaxial zu der Fläche (162) ist.

7. Gebläserotor (54) für eine Turbomaschine, umfassend eine Nabe (55) und eine Vielzahl von Schaufeln mit veränderbarer Einstellung (56), die jeweils relativ zu der Nabe (55) um eine eigene Schwenkachse (P) schwenkbar sind, wobei der Rotor (54) ferner einen Steigungsverstellmechanismus (70) nach einem der vorhergehenden Ansprüche umfasst, um eine Winkelposition jeder der Schaufeln mit veränderbarer Einstellung (56) um ihre jeweilige Schwenkachse (P) einzustellen.

8. Gasturbinentriebwerk (12), umfassend einen Gebläserotor (54) nach Anspruch 7.

9. Luftfahrzeug (10), umfassend mindestens ein Gasturbinentriebwerk (12) nach Anspruch 8.

10. Verfahren zum Verstellen der Steigung der Schaufeln (56) eines Gebläserotors (54) für eine Turbomaschine, die jeweils relativ zu einer Nabe (55) des Gebläserotors (54) um eine eigene Schwenkachse (P) schwenkbar sind, wobei das Verfahren das Einstellen einer Winkelposition jeder der Schaufeln (56) um ihre jeweilige Schwenkachse (P) mittels eines Steigungsverstellmechanismus (70) nach einem der Ansprüche 1 bis 6 umfasst.

## Claims

1. A pitch-change mechanism (70) for adjusting an angular position of at least one variable-setting blade (56) of an aircraft turbomachine around a pivot axis (P) of the blade (56), said pitch-change mechanism (70) comprising:
- a frame (72) fixed relative to the pivot axis (P),
- a control actuator (74) including a fixed part (100) integral with the frame (72) and a movable part (102) that is translatable along a longitudinal axis (X) with respect to the fixed part (100) between a retracted position and a deployed position,
- a connecting system (78) connecting the movable part (102) to the variable-setting blade (56) so as to convert the translation of the movable part (102) along the longitudinal axis (X) into a rotation of the variable-setting blade (56) around the pivot axis (P), and
- a pitch locking device (160) suitable for locking the translation of the movable part (102) with respect to the fixed part (100) in at least one direction,
wherein the pitch locking device (160) comprises:
- a surface (162) integral with the frame (72) or movable jointly with the movable part (102) with respect to the frame (72),
- a locking member (164) having an unlocked configuration away from the surface (162) and a locked configuration engaged with the surface (162) such that the movable part (102) is immobilized with respect to the frame (72),
- a movable member (210) that is translatable with respect to the locking member (164) between a retracted position in which it leaves the locking member (164) free to be in its unlocked configuration and a deployed position in which it forces the locking member (164) into its locked configuration,
- a biasing member (220) which urges the movable member (210) toward its deployed position, and
- a holding device (222) for holding the movable member (210) in its retracted position under certain predetermined conditions,
and wherein the locking member (164) comprises at least one deformable element (200), elastically deformable, having at rest a first radial thickness (e₁) and, when compressed parallel to the longitudinal axis (X), a second radial thickness (e₂) greater than the first radial thickness (e₁), the locking member (164) being in the unlocked configuration when the deformable element (200) is at rest and in the locked configuration when the deformable element (200) is compressed parallel to the longitudinal axis (X).

2. The pitch-change mechanism (70) according to claim 1, wherein the locking member (164) is interposed, in the direction of translation of the movable member (210), between the movable member (210) and a stop (180) so that the or each deformable element (200) is compressed between the movable member (210) and the stop (180) when the movable member (210) is in the deployed position, the or each deformable element (200) preferably being at rest when the movable member (210) is in the retracted position.

3. The pitch-change mechanism (70) according to claim 1 or 2, wherein the or each deformable element (200) is formed from a material having a strictly positive Poisson's ratio, preferably greater than 0.4, advantageously greater than 0.45, for example greater than 0.49.

4. The pitch-change mechanism (70) according to any one of claims 1 to 3, wherein the or each deformable element (200) is annular.

5. The pitch-change mechanism (70) according to any one of the preceding claims, wherein the surface (162) is cylindrical and preferably substantially coaxial with the longitudinal axis (X).

6. The pitch-change mechanism (70) according to claims 4 and 5 taken together, wherein the deformable element (200) is substantially coaxial with the surface (162).

7. A fan rotor (54) for a turbomachine comprising a hub (55) and a plurality of variable-setting blades (56) each pivotable relative to the hub (55) around a specific pivot axis (P), the rotor (54) further comprising a pitch-change mechanism (70) according to any one of the preceding claims for adjusting an angular position of each of the variable-setting blades (56) around its respective pivot axis (P).

8. A gas turbine engine (12) comprising a fan rotor (54) according to claim 7.

9. An aircraft (10) comprising at least one gas turbine engine (12) according to claim 8.

10. A method for changing the pitch of the blades (56) of a fan rotor (54) for a turbomachine, each pivotable relative to a hub (55) of the fan rotor (54) around a specific pivot axis (P), said method comprising adjusting an angular position of each of said blades (56) around its respective pivot axis (P) by means of a pitch changing mechanism (70) according to any one of claims 1 to 6.
